# EUROPÄISCHE PATENTSCHRIFT

(11) **EP 3 700 389 B1**
(45) Veröffentlichungstag und Bekanntmachung des Hinweises auf die Patenterteilung: **22.02.2023**
(21) Anmeldenummer: 17808754.0
(22) Anmeldetag: 27.10.2017
(51) Int. Cl.: A47B 9/00, H02K 5/24, H02K 5/22

(54) **HÖHENVERSTELLBARE GESTELLTEILE FÜR EIN MÖBELSTÜCK, INSBESONDERE EIN HÖHENVERSTELLBARES TISCHBEIN SOWIE TISCHGESTELL MIT DERARTIGEN GESTELLTEILEN**
HEIGHT-ADJUSTABLE FRAME PARTS FOR AN ITEM OF FURNITURE, PARTICULARLY A HEIGHT-ADJUSTABLE TABLE LEG, AND TABLE UNDERFRAME COMPRISING SUCH FRAME PARTS
ÉLÉMENTS DE BÂTI RÉGLABLES EN HAUTEUR POUR MEUBLE, EN PARTICULIER PIÉTEMENT DE TABLE RÉGLABLE EN HAUTEUR ET BÂTI DE TABLE COMPRENANT DES ÉLÉMENTS DE BÂTI DE CE TYPE

(43) Veröffentlichungstag der Anmeldung: 02.09.2020
(73) Patentinhaber: Oelschläger Metalltechnik GmbH, 27318 Hoya (DE)
(72) Erfinder: JACOBS, Michael, 28215 Bremen (DE)
(74) Vertreter: Manasse, Uwe
(86) Internationale Anmeldenummer: PCT/DE2017/100920
(87) Internationale Veröffentlichungsnummer: WO 2019/080949

(56) Entgegenhaltungen:
- EP-B1- 1 621 055
- EP-B1- 2 375 548
- Andrew Gavrilov: "Fix Ikea Bekant Sit/Stand Desk when it stops working Part 1", Youtube, 4 March 2016 (2016-03-04), page 1 pp., XP054981795, Retrieved from the Internet: URL:https://www.youtube.com/watch?v=K_ZPgg tWknc [retrieved on 2021-05-12]

## Beschreibung

Die vorliegende Erfindung betrifft ein höhenverstellbares Gestellteil für ein Möbelstück, insbesondere ein höhenverstellbares Tischbein, sowie ein Tischgestell und einen Tisch mit demselben.

Neue Büros werden häufig mit höhenverstellbaren Tischen zur Verbesserung der ergonomischen Position des Benutzers ausgestattet und bieten die Möglichkeit, im Stehen oder im Sitzen zu arbeiten. Die hohe Nachfrage nach z. B. Tischen mit Hubsäulen bzw. teleskopierbaren Tischbeinen machen ein bezahlbares Standardsystem attraktiv. Der durch Geräte, wie z. B. Computer oder höhenverstellbare Tische, erzeugte Lärm stellt einen zunehmend zu beachtenden Aspekt beim Entwerfen von komfortablen Büros bzw. Büroumgebungen dar.

Hubsäulen bzw. teleskopierbare Tischbeine werden herkömmlicherweise aus extrudierten Metallrohren mit speziellen Längen zusammengesetzt, wobei an der Oberseite der Hubsäule ein Motorgehäuse angebracht ist, in dem ein Getriebemotor zum Antreiben eines linearen Aktuators untergebracht ist, der in der Hubsäule gekapselt ist. Typische Hubsäulen für höhenverstellbare Tische weisen einen Motor auf, der wegen des Schneckengetriebes senkrecht zum linearen Aktuator angeordnet ist, was die mechanische selbsthemmende Funktion bei Stromausfall verbessert. Ein solches Motorgehäuse zur Aufnahme eines Schneckengetriebemotors, der auf der bzw. den Hubsäule(n) sitzt, ist beispielsweise in TWM 523 021, EP 2 375 548 B1, EP 1 621 055 B1 und DE 10 018 742 B4 offenbart.

EP 1 621 055 B1 offenbart ein Motorgehäuse, das unter Verwendung von Metallumformung hergestellt ist und dem Motorgehäuse runde Ecken verleiht. Der Motor sitzt im Gehäuse unter Verwendung eines Schaumstoffblocks, um lärmverursachende Schwingungen zu reduzieren. Der Freiheitsgrad der verbleibenden Translation wird durch die Kopplung des Schneckenrads mit der Spindel der linearen Aktuators, der sich unter dem Motorgehäuse befindet, blockiert. Ein Deckel verschließt das Motorgehäuse an der Oberseite durch Einschnappen in Löcher, die an den Seitenpaneelen des Motorgehäuses zusätzlich ausgeschnitten sind.

Ein ähnlicher Umformprozess wird bei der Herstellung des Motorgehäuses gemäß der EP 2 375 548 B1 verwendet. Zusätzlich zu einer kleinen Schaumstoffaussparung verringern mit einem elastischen Material gekoppelte Seitenelemente die Motorschwingungen. Die Montage und die Vielzahl von erforderlichen Teilen führen zu einer teuren Lösung.

In der TWM 523 021 wird ein Motorgehäuse in Würfelgestalt offenbart, wobei ein Deckel auf die Oberseite geschraubt ist. Der Motor wird durch Verwendung von Teilen des Gehäusebodens und des Deckels festgesetzt, wodurch eine Möglichkeit für Kabelanordnungen geboten wird. Andrew Gavrilov: "Fix Ikea Bekant Sit/Stand Desk when it stops working Part 1", Youtube, 4. März 2016 (2016-03-04), Seite 1 pp., XP054981795, Gefunden im Internet: URL:https://www.youtube.com/watch?v=K_ZPggtWknc[gefunden am 2021-05-12] offenbart ein höhenverstellbare Gestellteil für ein Möbelstück, insbesondere ein höhenverstellbares Tischbein, umfassend einen Höhenverstellmechanismus, der einen Motor in einem Gehäuse aufweist, wobei ein Kabel vom Motor zu einem Steckermodul am Gehäuse geführt ist, mit dem der Motor mit einer Motorsteuerung verbindbar ist, wobei der Motor im Gehäuse am Steckermodul gehalten ist.

Der vorliegenden Erfindung liegt somit die Aufgabe zugrunde, ein kostengünstigeres höhenverstellbares Gestellteil für ein Möbelstück, insbesondere ein höhenverstellbares Tischbein, bereitzustellen.

Diese Aufgabe wird durch ein höhenverstellbares Gestellteil gemäß Anspruch 1 gelöst.

Weiterhin wird diese Aufgabe gelöst durch ein Tischgestell mit einem Gestellteil nach einem der Ansprüche 1 bis 19.

Ferner wird diese Aufgabe gelöst durch einen Tisch mit einem Tischgestell nach Anspruch 20.

Bei dem Gestellteil kann vorgesehen sein, dass das Steckermodul an einer Seitenwand des Gehäuses befestigt ist.

Insbesondere kann vorgesehen sein, dass das Steckermodul in einer Aussparung des Gehäuses befestigt ist.

Vorteilhafterweise ist das Steckermodul in die Aussparung einschiebbar.

Gemäß einer besonderen Ausführungsform der vorliegenden Erfindung weist das Steckermodul Eingriffsmittel, insbesondere Rast- oder Schnappmittel, auf, die mit Gegeneingriffsmitteln, insbesondere Gegenrast- oder Gegenschnappmitteln, am Gehäuse zusammenwirken, um das Steckermodul am Gehäuse zu sichern.

Vorteilhafterweise weist das Steckermodul Flansche auf, um sich an der Innen- und/oder Außenseite des Gehäuses abzustützen.

Vorteilhafterweise wird der Zapfen klemmend in der Aufnahme gehalten.

Zweckmäßigerweise verrastet der Zapfen in der Aufnahme.

Alternativ verfügt der Zapfen über ein Außengewinde und die Aufnahme über ein Innengewinde. Zweckmäßigerweise stützt sich der Motor mit einer Anlagefläche am Steckermodul ab. Insbesondere kann dabei vorgesehen sein, dass die Anlagefläche parallel oder unter einem Winkel zur Wand des Gehäuses verläuft, an der sich das Steckermodul befindet.

Vorteilhafterweise ist das Kabel entlang eines magnetischen Körpers geführt, insbesondere um den magnetischen Körper gewickelt.

Zweckmäßigerweise ist das Steckermodul für ein sechs- oder achtpoliges Kabel ausgelegt.

In einer besonderen Ausführungsform ist nur ein Ende oder eine Seite des Motors im Gehäuse am Steckermodul gehalten.

Gemäß einer besonderen Ausführungsform der vorliegenden Erfindung weist das Gestellteil eine höhenverstellbare Säule auf.

Insbesondere kann dabei vorgesehen sein, dass sich das Gehäuse an einem Ende der Säule befindet.

Ferner kann vorgesehen sein, dass das Gehäuse Paneele aufweist. Der Begriff "Paneele" soll beispielsweise Seiten- und/oder Deckelpaneele und/oder Gehäuseboden umfassen. Zudem werden die Begriffe "Seitenwand" und "Seitenpaneel" auch synonym verwendet.

Vorteilhafterweise ist das Gehäuse aus mindestens drei zusammengefügten Paneelen geformt.

Schließlich umfassen gemäß einer besonderen Ausführungsform der vorliegenden Erfindung die Paneele mindestens zwei Seitenpaneele und ein Deckelpaneel und verfügt das Deckelpaneel über ein Eingriffsmittel, insbesondere Schnapp- oder Rastmittel, welches in ein Gegeneingriffsmittel, insbesondere Gegeneinschnapp- oder Gegenrastmittel, in den mindestens zwei Seitenpaneelen eingreift.

Die vorliegende Erfindung liefert einen einfacheren Aufbau. Damit sind weniger Herstellschritte und/oder weniger Material erforderlich, wodurch sich die höhenverstellbaren Gestellteile mit einem geringeren Zeit- und Kostenaufwand herstellen lassen. Zumindest in einer besonderen Ausführungsform lässt sich die Herstell- bzw. Montagezeit durch die Möglichkeit einer werkzeuglosen Herstellung bzw. Montage (noch weiter) reduzieren und/oder lassen sich die Funktionen von kritischen Teilen kombinieren.

Weitere Merkmale und Vorteile der Erfindung ergeben sich aus den beigefügten Ansprüchen und aus der nachfolgenden Beschreibung, in der mehrere Ausführungsbeispiele anhand der schematischen Zeichnungen im Einzelnen erläutert werden. Dabei zeigt:
- Figur 1:: einen höhenverstellbaren Tisch mit zwei höhenverstellbaren Tischbeinen (Hubsäulen) in perspektivischer Ansicht;
- Figur 2:: ein höhenverstellbares Tischbein gemäß einer besonderen Ausführungsform der vorliegenden Erfindung in verschiedenen Ansichten (in der linken Hälfte eine Seitenansicht und eine Draufsicht; in der rechten Hälfte zwei perspektivische Ansichten);
- Figur 3:: Details vom oberen Bereich des Tischbeins von Figur 2 in Explosionsdarstellung in verschiedenen Ansichten (in der oberen Hälfte Seitenansichten; in der unteren Hälfte perspektivische Ansichten);
- Figur 4:: Detailansichten (Draufsicht) (oben); Seitenansichten (Mitte); perspektivische Ansichten (unten) zu Figur 3;
- Figur 5:: weitere Detailansichten (Seitenansichten (oben); perspektivische Ansichten (unten)) (nochmals) zu Figur 3;
- Figur 6:: perspektivische Ansichten (oben) und eine Rückansicht (unten links) sowie eine Vorderansicht (unten rechts) von einem Steckermodul für einen höhenverstellbares Tischbein gemäß einer besonderen Ausführungsform der vorliegenden Erfindung;
- Figur 7:: diverse Ansichten (Draufsicht) (oben); Seitenansichten (Mitte); perspektivische Ansichten (unten) von einem Deckelpaneel für ein Gehäuse für einen Motor eines höhenverstellbaren Tischbeins gemäß einer besonderen Ausführungsform der vorliegenden Erfindung.

Auch wenn im Nachfolgenden die Formulierung "eine Ausführungsform" verwendet werden sollte, muss es sich dabei nicht um ein und dieselbe Ausführungsform handeln. Vielmehr kann es sich auch um eine weitere und/oder eine alternative Ausführungsform handeln.

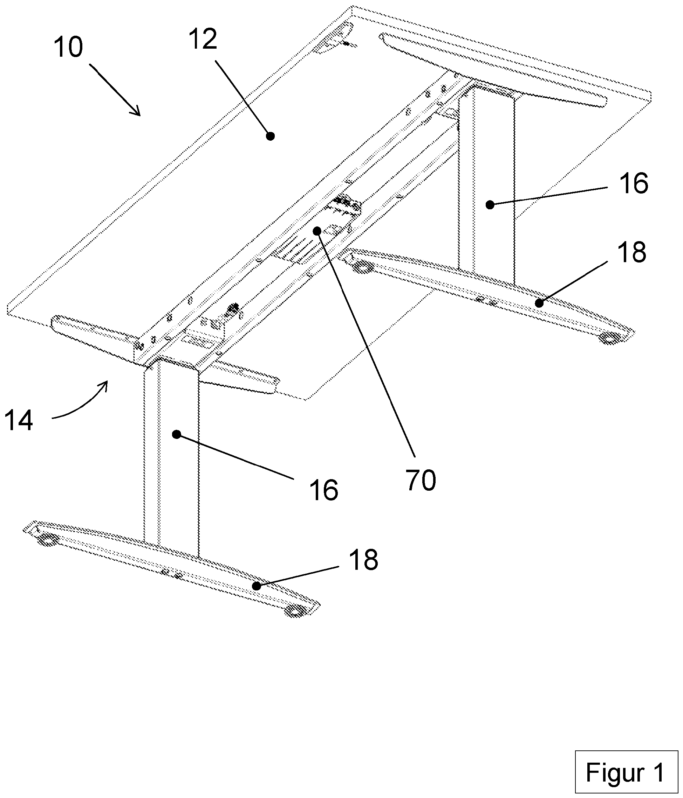

Der in der Figur 1 gezeigte höhenverstellbare Tisch 10 weist u. a. eine Tischplatte 12 auf einem Tischgestell 14 auf, das u. a. auf jeder Seite ein höhenverstellbares Tischbein 16 und jeweils einen Tischfuß 18 aufweist.

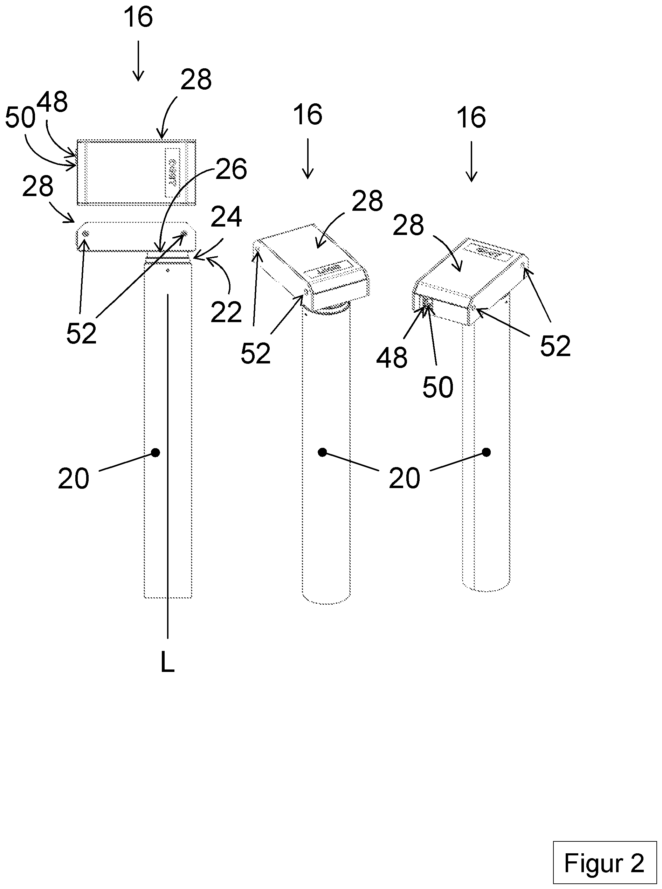

Das in der Figur 2 beispielhaft und in eingefahrenen Zustand gezeigte höhenverstellbare Tischbein 16 umfasst drei teleskopartig axial ineinander verschiebbare Tischbeinelemente 20, 22 und 24, wobei in diesem Beispiel das oberste Tischbeinelement 24 im Inneren des mittleren Tischbeinelements 22 und das mittlere Tischbeinelement 22 im Inneren des unteren Tischbeinelements 20 verschiebbar ist. Dies wird durch eine jeweilige Gleitabstützung (nicht gezeigt) ermöglicht.

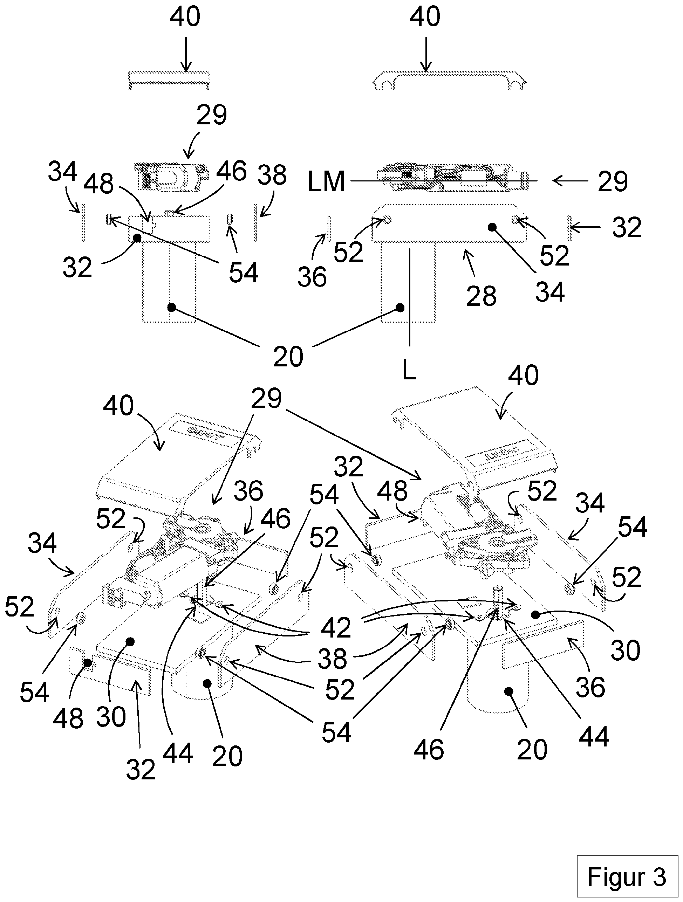

Am oberen Ende des oberen Tischbeinelements 24 ist ein Gehäuse 28 befestigt, in dem sich ein Motor bzw. Getriebemotor 29 (siehe z. B. Figur 3) befindet. Genauer gesagt ist das Gehäuse 28 in diesem Beispiel im Wesentlichen als ein rechteckiger Kasten ausgebildet, der im rechten Winkel zur Längsachse L des Tischbeins 16 angeordnet ist.

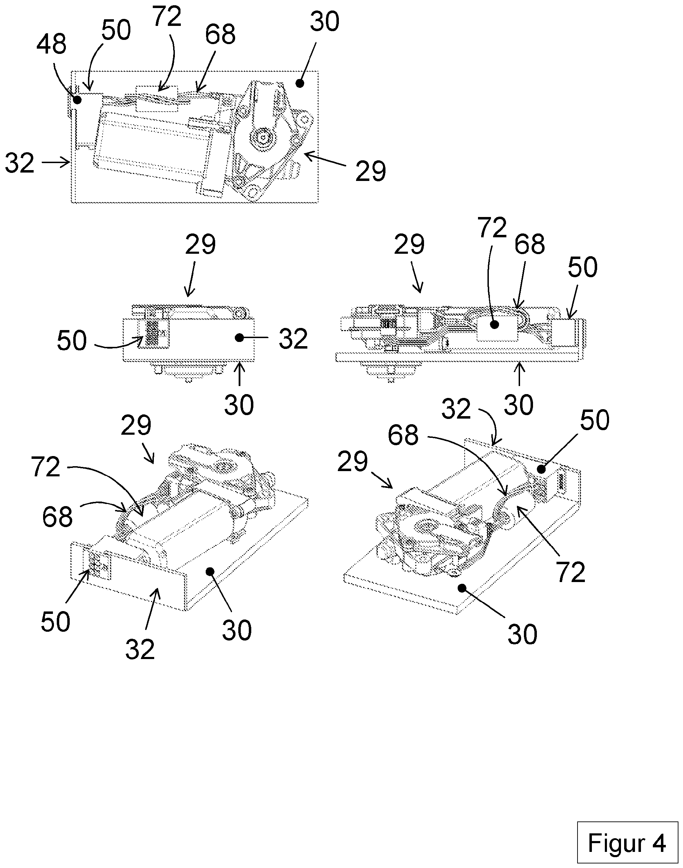

Wie sich aus den Figuren 3 und 4 ergibt, wird das Gehäuse 28 von sechs separaten Teilen (Paneelen) gebildet. Diese umfassen einen Gehäuseboden 30, vier zueinander jeweils im rechten Winkel angeordnete Seitenpaneele 32, 34, 36 und 38 und ein oberes Deckelpaneel 40.

Der Gehäuseboden 30 ist auf die Oberseite des oberen Tischbeinelements 24 beispielsweise laserverschweißt. Der Gehäuseboden 30 weist eine Öffnung 44 auf, durch die sich das obere Ende einer linearen Aktuatorkupplung 46 aus dem oberen Ende 26 des oberen Tischbeinelements 24 hinaus erstreckt. Die lineare Aktuatorkupplung 46 steht mit dem Motor 29 in Wirkverbindung. In diesem Beispiel weist der Motor 29 eine Längserstreckung LM auf, die im Wesentlichen im rechten Winkel zur Längsachse L des Tischbeins 16 verläuft. Schrauben 42 dienen zur Befestigung des Aktuators in dem Tischbeinelement 20.

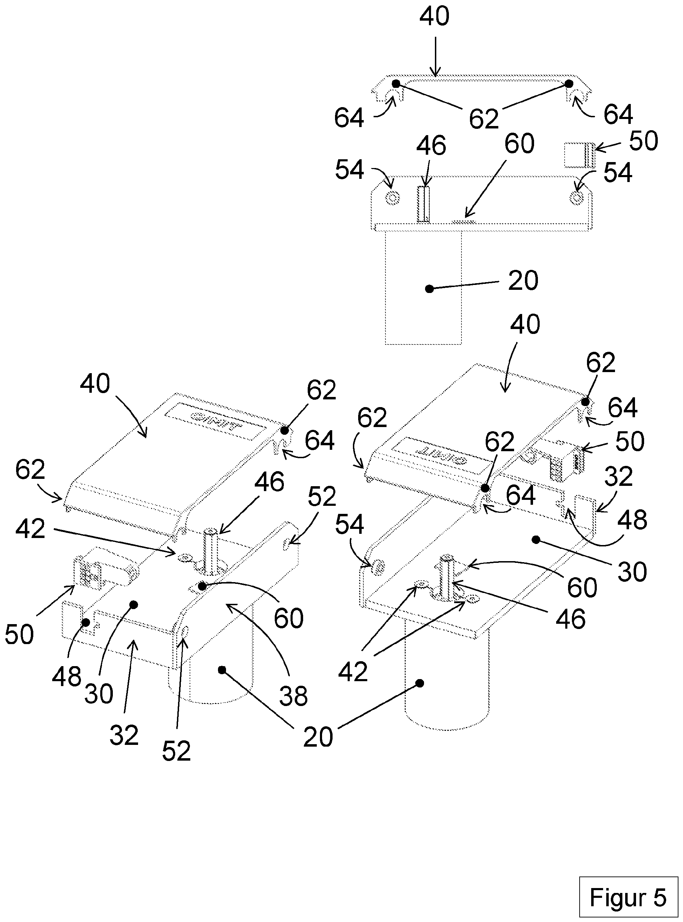

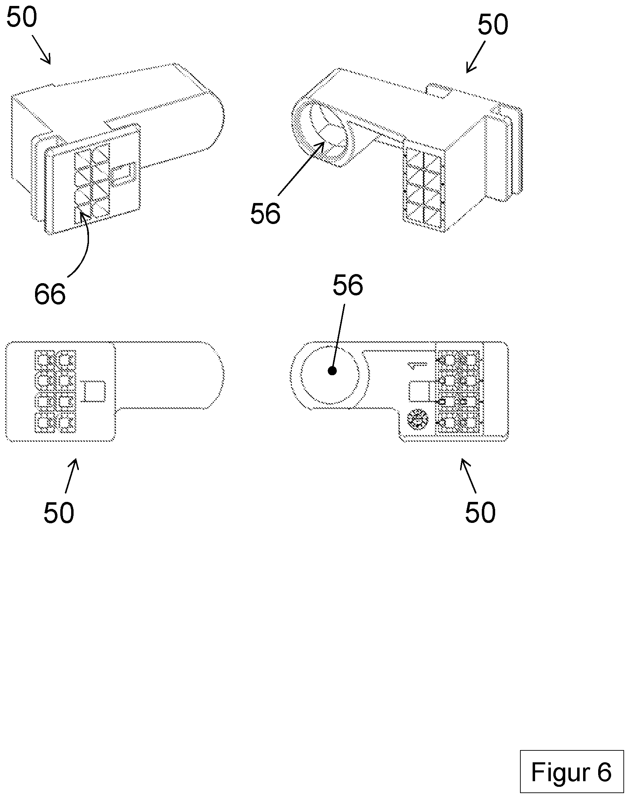

Die vier Seiten Paneele 32, 34, 36 und 38 sind in diesem Beispiel durch Laserschweißen mit dem Gehäuseboden 30 und den jeweils zu beiden Seiten benachbarten Seitenpaneelen verbunden. Eines (32) der beiden kurzen Seitenpaneele 32 und 36 weist eine nach oben hin offene Aussparung 48 zur Aufnahme eines Steckermoduls 50 (s. a. Figuren 5 und 6) auf. Vorzugsweise sind die Aussparung 48 und das Steckermodul 50 so gestaltet, dass eine Formschlussverbindung entsteht, wenn das Steckermodul 50 zumindest teilweise in die Aussparung 48 geschoben wird.

Die beiden langen Seitenpaneele 34 und 38 weisen an ihren Längsenden jeweils eine Öffnung 52 auf, in die von der Innenseite eine jeweilige Gewindemutter (Einpressmutter) 54 eingepresst ist.

Während im Stand der Technik das Gehäuse beispielsweise durch Umformen einer Materialplatte bzw. -bahn mit einheitlicher Dicke hergestellt wird und somit sowohl der Gehäuseboden als auch die Seitenpaneele eine einheitliche Wandstärke aufweisen, kann hier durch Verwendung von Einzelteilen bei der Wandstärke der Seitenpaneele Material eingespart werden, indem diese aus einer Materialplatte bzw. -bahn mit einen geringeren Wandstärke als der Gehäuseboden hergestellt werden.

Das Steckermodul weist eine Aufnahme 56 für einen zum Motor 29 gehörenden Zapfen (nicht sichtbar) auf. Die Aufnahme 56 dient sowohl zur Positionierung des Motors 29 als auch zum Festsetzen des Motors im Gehäuse 28. Zudem wird der Motor 29 über ein Faser-Pad 60 auf dem Gehäuseboden 30 abgestützt. Dadurch lässt sich die Verwendung von teuren Kunststoffzusammensetzungen etc. erheblich reduzieren und sich eine werkzeugfreie Montage ermöglichen. Das Faser-Pad 60 reduziert auch Motorschwingungen. Das Faser-Pad 60 kann sowohl auf den Gehäuseboden 30 als auch - insbesondere alternativ - an dem Motor 29 angebracht, z. B. geklebt, sein.

In der Figur 5 wird im Detail gezeigt, wie das Deckelpaneel 40 gehaltert wird. Es weist dazu an den langen Seiten jeweils einen sich nach unten erstreckenden Steg 62 mit an den Längsenden jeweils einer nach unten offenen Aussparung 64 auf. Die Stege 62 sind so angeordnet und die Aussparungen 64 sind so gestaltet, dass das Deckelpaneel von oben mit den Aussparungen 64 auf den Gewindemuttern 54 abstützt und ein Formschluss zwischen den Aussparungen 64 und den Gewindemuttern 54 entsteht.

Die Gewindemuttern 54 dienen zur Befestigung des Gehäuses 28 an einem Tischgestell, beispielsweise an dem Tischgestell 14.

Aus der Figur 6 ergibt sich beispielhaft eine mögliche Gestaltung des Steckermoduls 50 mit Buchsen 66 für den Anschluss eines oder mehrerer Kabel 68 (siehe beispielsweise Figur 4) und der Aufnahme 56 für den Zapfen des Motors 29. Das Kabel 68 dient zur Verbindung des Motors 29 mit einer Motorsteuerung 70 (siehe Figur 1). Das Kabel 68 wird zwischen dem Steckermodul 50 und dem Motor 29 durch und/oder an einen magnetischen Körper 72 geführt Der magnetische Körper dient zur Unterdrückung von elektromagnetischen Störungen.

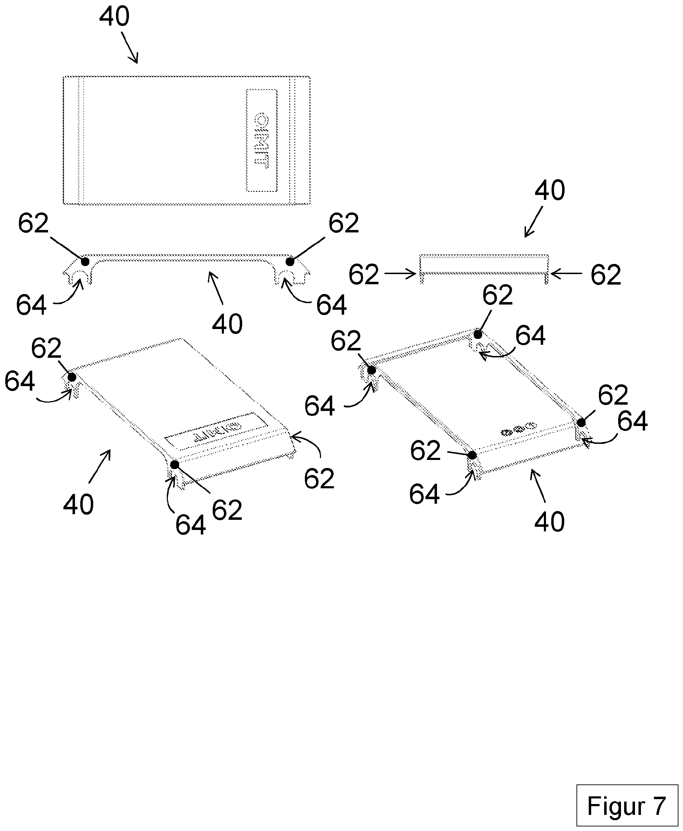

Schließlich zeigt die Figur 7 das Deckelpaneel 40 in Einzeldarstellungen.

Die in der vorstehenden Beschreibung, in den Zeichnungen sowie in den Ansprüchen offenbarten Merkmale der Erfindung können sowohl einzeln als auch in den beliebigen Kombinationen für die Verwirklichung der Erfindung in ihren verschiedenen Ausführungsformen wesentlich sein.

### Bezugszeichenliste

- 10: Tisch
- 12: Tischplatte
- 14: Tischgestell
- 16: Tischbein
- 20,22, 24: Tischbeinelemente
- 26: oberes Ende
- 28: Gehäuse
- 29: Motor
- 30: Gehäuseboden
- 32, 34, 36, 38: Seitenpaneele
- 40: Deckelpaneel
- 42: Schrauben
- 44: Öffnungen
- 46: lineare Aktuatorkupplung
- 48: Aussparung
- 50: Steckermodul
- 52: Öffnung
- 54: Gewindemuttern
- 56: Aufnahme
- 60: Faser-Pad
- 62: Stege
- 64: Aussparung
- 66: Buchsen
- 68: Kabel
- 70: Motorsteuerung
- 72: magnetischer Körper
- L: Längsachse
- LM: Längserstreckung

## Patentansprüche

1. Höhenverstellbares Gestellteil für ein Möbelstück, insbesondere ein höhenverstellbares Tischbein (16), umfassend einen Höhenverstellmechanismus, der einen Motor (29) in einem Gehäuse aufweist (28), **dadurch gekennzeichnet, dass**
ein Kabel (68) vom Motor (29) zu einem Steckermodul (50) am Gehäuse (28) geführt ist, mit dem der Motor (29) mit einer Motorsteuerung (70) verbindbar ist, wobei
der Motor (29) im Gehäuse (28) am Steckermodul (50) mit einem Zapfen und einer Aufnahme (56) für den Zapfen gehalten ist,
wobei sich der Zapfen am Motor (29) und die Aufnahme (56) am Steckermodul (50) befindet.

2. Höhenverstellbares Gestellteil nach Anspruch 1, wobei das Steckermodul (50) an einer Seitenwand des Gehäuses (28) befestigt ist.

3. Höhenverstellbares Gestellteil nach einem der vorhergehenden Ansprüche, wobei das Steckermodul (50) in einer Aussparung (48) des Gehäuses (28) befestigt ist.

4. Höhenverstellbares Gestellteil nach Anspruch 3, wobei das Steckermodul (50) in die Aussparung (48) einschiebbar ist.

5. Höhenverstellbares Gestellteil nach einem der vorhergehenden Ansprüche, wobei das Steckermodul (50) Eingriffsmittel, insbesondere Rast- oder Schnappmittel, aufweist, die mit Gegeneingriffsmitteln, insbesondere Gegenrast- oder Gegenschnappmitteln, am Gehäuse (28) zusammenwirken, um das Steckermodul (50) am Gehäuse (28) zu sichern.

6. Höhenverstellbares Gestellteil nach einem der vorhergehenden Ansprüche, **dadurch gekennzeichnet, dass** das Steckermodul (50) Flansche aufweist, um sich an der Innen- und/oder Außenseite des Gehäuses (28) abzustützen.

7. Höhenverstellbares Gestellteil nach Anspruch 1, wobei der Zapfen klemmend in der Aufnahme gehalten wird.

8. Höhenverstellbares Gestellteil nach Anspruch 7 oder 8, wobei der Zapfen in der Aufnahme verrastet.

9. Höhenverstellbares Gestellteil nach Anspruch 1, wobei der Zapfen über ein Außengewinde und die Aufnahme über ein Innengewinde verfügt.

10. Höhenverstellbares Gestellteil nach einem der vorhergehenden Ansprüche, wobei sich der Motor mit einer Anlagefläche am Steckermodul abstützt.

11. Höhenverstellbares Gestellteil nach Anspruch 10, wobei die Anlagefläche parallel oder unter einem Winkel zur Wand des Gehäuses verläuft, an der sich das Steckermodul befindet.

12. Höhenverstellbares Gestellteil nach einem der vorhergehenden Ansprüche, wobei das Kabel (68) entlang eines magnetischen Körpers (52) geführt ist, insbesondere um den magnetischen Körper gewickelt ist.

13. Höhenverstellbares Gestellteil nach einem der vorhergehenden Ansprüche, wobei das Steckermodul für ein 6- oder 8-poliges Kabel ausgelegt ist.

14. Höhenverstellbares Gestellteil nach einem der vorhergehenden Ansprüche, wobei nur ein Ende oder eine Seite des Motors (29) im Gehäuse (28) am Steckermodul (50) gehalten ist.

15. Höhenverstellbares Gestellteil nach einem der vorhergehenden Ansprüche, wobei es eine höhenverstellbare Säule aufweist.

16. Höhenverstellbares Gestellteil nach Anspruch 15, wobei sich das Gehäuse (28) an einem Ende der Säule befindet.

17. Höhenverstellbares Gestellteil nach Anspruch 15 oder 16, wobei das Gehäuse (28) Paneele aufweist.

18. Höhenverstellbares Gestellteil nach Anspruch 17, wobei das Gehäuse (28) aus mindestens drei zusammengefügten Paneelen geformt ist.

19. Höhenverstellbares Gestellteil nach Anspruch 17, wobei die Paneele mindestens zwei Seitenpaneele (32, 34, 36, 38) und ein Deckelpaneel (40) umfassen und das Deckelpaneel (40) über ein Eingriffsmittel, insbesondere Schnapp- oder Rastmittel, verfügt, welches in ein Gegeneingriffsmittel, insbesondere Gegeneinschnapp- oder Gegenrastmittel, in den mindestens zwei Seitenpaneelen eingreift.

20. Tischgestell (14) mit einem Gestellteil nach einem der vorangehenden Ansprüche.

21. Tisch (10) mit einem Tischgestell (14) nach Anspruch 20.

## Claims

1. Height-adjustable frame part for an item of furniture, particularly a height-adjustable table leg (16), comprising a height adjustment mechanism which has a motor (29) in a housing (28), **characterized in that**
a cable (68), with which the motor (29) can be connected to a motor controller (70), is led from the motor (29) to a connector module (50) on the housing (28), wherein
the motor (29) is held in the housing (28) on the connector module (50) with a pin and a receptacle (56) for the pin,
wherein the pin is located on the motor (29) and the receptacle (56) on the connector module (50).

2. Height-adjustable frame part according to Claim 1, wherein the connector module (50) is fastened to a side wall of the housing (28).

3. Height-adjustable frame part according to one of the preceding claims, wherein the connector module (50) is fastened in a recess (48) in the housing (28).

4. Height-adjustable frame part according to Claim 3, wherein the connector module (50) can be inserted into the recess (48).

5. Height-adjustable frame part according to one of the preceding claims, wherein the connector module (50) has engagement means, particularly latching or snap-in means, which interact with mating engagement means, particularly mating latching or mating snap-in means, on the housing (28) in order to secure the connector module (50) to the housing (28).

6. Height-adjustable frame part according to one of the preceding claims, **characterized in that** the connector module (50) has flanges in order to be supported on the inner and/or outer side of the housing (28).

7. Height-adjustable frame part according to Claim 1, wherein the pin is held in the receptacle in a clamping manner.

8. Height-adjustable frame part according to Claim 7 or 8, wherein the pin latches in the receptacle.

9. Height-adjustable frame part according to Claim 1, wherein the pin has an external thread and the receptacle has an internal thread.

10. Height-adjustable frame part according to one of the preceding claims, wherein the motor is supported with a contact surface on the connector module.

11. Height-adjustable frame part according to Claim 10, wherein the contact surface extends parallel or at an angle to the wall of the housing on which the connector module is located.

12. Height-adjustable frame part according to one of the preceding claims, wherein the cable (68) is led along a magnetic body (52), particularly is wound around the magnetic body.

13. Height-adjustable frame part according to one of the preceding claims, wherein the connector module is designed for a 6-pin or 8-pin cable.

14. Height-adjustable frame part according to one of the preceding claims, wherein only one end or one side of the motor (29) is held in the housing (28) on the connector module (50).

15. Height-adjustable frame part according to one of the preceding claims, wherein it has a height-adjustable pillar.

16. Height-adjustable frame part according to Claim 15, wherein the housing (28) is located at one end of the pillar.

17. Height-adjustable frame part according to Claim 15 or 16, wherein the housing (28) has panels.

18. Height-adjustable frame part according to Claim 17, wherein the housing (28) is formed from at least three panels joined together.

19. Height-adjustable frame part according to Claim 17, wherein the panels comprise at least two side panels (32, 34, 36, 38) and a top panel (40), and the top panel (40) has an engagement means, particularly a snap-in or latching means, which engages in a mating engagement means, particularly mating snap-in or mating latching means, in the at least two side panels.

20. Table underframe (14) having a frame part according to one of the preceding claims.

21. Table (10) having a table underframe (14) according to Claim 20.

## Revendications

1. Élément de bâti réglable en hauteur pour un meuble, en particulier un piétement de table (16) réglable en hauteur, comprenant un mécanisme de réglage en hauteur qui présente un moteur (29) dans un carter (28), **caractérisé en ce**
**qu'**un câble (68) est guidé à partir du moteur (29) jusqu'à un module d'enfichage (50) sur le carter (28), module à l'aide duquel le moteur (29) peut être connecté à une commande de moteur (70),
le moteur (29) dans le carter (28) étant retenu sur le module d'enfichage (50) par un tourillon et un logement (56) pour le tourillon,
le tourillon se trouvant sur le moteur (29) et le logement (56) se trouvant sur le module d'enfichage (50).

2. Élément de bâti réglable en hauteur selon la revendication 1, le module d'enfichage (50) étant fixé à une paroi latérale du carter (28).

3. Élément de bâti réglable en hauteur selon l'une des revendications précédentes, le module d'enfichage (50) étant fixé dans un évidement (48) du carter (28).

4. Élément de bâti réglable en hauteur selon la revendication 3, le module d'enfichage (50) pouvant être inséré dans l'évidement (48).

5. Élément de bâti réglable en hauteur selon l'une des revendications précédentes, le module d'enfichage (50) présentant des moyens d'entrée en prise, en particulier des moyens d'encliquetage ou à déclic, qui coopèrent avec des moyens d'entrée en prise conjugués, en particulier des moyens d'encliquetage ou à déclic conjugués, sur le carter (28), afin d'assujettir le module d'enfichage (50) sur le carter (28).

6. Élément de bâti réglable en hauteur selon l'une des revendications précédentes, **caractérisé en ce que** le module d'enfichage (50) présente des brides, pour être supporté sur le côté intérieur et/ou le côté extérieur du carter (28).

7. Élément de bâti réglable en hauteur selon la revendication 1, le tourillon étant retenu par serrage dans le logement.

8. Élément de bâti réglable en hauteur selon la revendication 7 ou 8, le tourillon étant encliqueté dans le logement.

9. Élément de bâti réglable en hauteur selon la revendication 1, le tourillon possédant un filetage extérieur et le logement possédant un filetage intérieur.

10. Élément de bâti réglable en hauteur selon l'une des revendications précédentes, le moteur étant supporté par une surface d'appui sur le module d'enfichage.

11. Élément de bâti réglable en hauteur selon la revendication 10, la surface d'appui s'étendant parallèlement ou suivant un angle par rapport à la paroi du carter sur laquelle le module d'enfichage se trouve.

12. Élément de bâti réglable en hauteur selon l'une des revendications précédentes, le câble (68) étant guidé le long d'un corps magnétique (52), en particulier enroulé autour du corps magnétique.

13. Élément de bâti réglable en hauteur selon l'une des revendications précédentes, le module d'enfichage étant conçu pour un câble à 6 ou 8 pôles.

14. Élément de bâti réglable en hauteur selon l'une des revendications précédentes, seulement une extrémité ou un côté du moteur (29) étant retenu (e) dans le carter (28) sur le module d'enfichage (50).

15. Élément de bâti réglable en hauteur selon l'une des revendications précédentes, celui-ci présentant une colonne réglable en hauteur.

16. Élément de bâti réglable en hauteur selon la revendication 15, le carter (28) se trouvant à une extrémité de la colonne.

17. Élément de bâti réglable en hauteur selon la revendication 15 ou 16, le carter (28) présentant des panneaux.

18. Élément de bâti réglable en hauteur selon la revendication 17, le carter (28) étant formé à partir d'au moins trois panneaux assemblés.

19. Élément de bâti réglable en hauteur selon la revendication 17, les panneaux comprenant au moins deux panneaux latéraux (32, 34, 36, 38) et un panneau formant couvercle (40) et le panneau formant couvercle (40) possédant un moyen d'entrée en prise, en particulier un moyen à déclic ou d'encliquetage, lequel vient en prise dans un moyen d'entrée en prise conjugué, en particulier un moyen à déclic ou d'encliquetage conjugué, dans les au moins deux panneaux latéraux.

20. Bâti de table (14) présentant un élément de bâti selon l'une des revendications précédentes.

21. Table (10) présentant un bâti de table (14) selon la revendication 20.
